# EUROPEAN PATENT SPECIFICATION

(11) **EP 3 670 255 B1**
(45) Date of publication and mention of the grant of the patent: **09.03.2022**
(21) Application number: 18212910.6
(22) Date of filing: 17.12.2018
(51) Int. Cl.: B60N 3/04, B60Q 3/54, B60Q 3/74

(54) **CARPET WITH AN ELECTROLUMINESCENT LAYER**
TEPPICH MIT EINER ELEKTROLUMINESZENTEN SCHICHT
TAPIS AVEC UNE COUCHE ÉLECTROLUMINESCENTE

(43) Date of publication of application: 24.06.2020
(73) Proprietor: Autoneum Management AG, 8406 Winterthur (CH)
(72) Inventor: Delmas, Bertrand, 8406 Winterthur (CH)

(56) References cited:
- WO-A2-2011/161593
- US-A1- 2018 229 651
- US-B2- 8 388 184

## Description

### Technical Field

The invention relates to a carpet for a vehicle, such as a carpet, inner dash, optional mats or covering for areas in the front or rear trunk of a vehicle, with an integrated electroluminescent layer.

### Background Art

Passenger vehicles are usually equipped with interior light sources, which are located near the ceiling of the passenger compartment, in order to illuminate the interior of the vehicle. In some passenger vehicles, such as cars, interior lighting has been introduced at the bottom edge of the dashboard, which illuminates the floor for front passengers, or underneath the front seats at the rear, to illuminate the floor for rear seat passengers. These light sources are often conventional bulb lights and recently of the LED (Light-Emitting Diode) type.

There have been some attempts to integrate light sources into trim parts of a vehicle as courtesy light, by using LED or OLED (Organic Light-Emitting Diodes) type of lamps.

Since LED light is strongly concentrated in one spot, several LEDs are usually placed next to each other in order to create a light that is more or less evenly spread out and in order to be able to create a light in a certain shape such as a text message. Furthermore the use of LED requires a distance from the LED to the back of the trim part to uniformly diffuse the light in order to avoid the light to be strongly concentrated in a few spots. The LEDs are normally arranged in a stiff panel that needs a lot of space which has an impact on the thickness of final trim part as well as the design. Therefore the thickness of the layer or layers of the trim part have to be reduced in order to fit the LED panel or LED lamp and/or the trim part is bulging where the LED lamp is fitted due to the thickness of the LED lamp. Furthermore LED lamps increase, at least locally, the compression stiffness of soft trim parts such as carpets, since the stiff LED lamp is situated close to the surface of the carpet and since the thickness of the carpet's layers may be reduced. The compressional stiffness of, for example, an interior floor system has high relevance in the automotive field and can be linked to the perceived comfort inside the cabin.

Therefore the LED types are unsuitable for carpets such as carpets where both the acoustic function of the carpet as well as the perceived comfort inside the cabin is impaired by the LED lamp. Furthermore LED lamps generate heat and they are rather heavy and require a complicated production process in order to fit them into the carpet. Due to the generated heat LED lamps need cooling which is further increasing the cost and space needed for integration in the carpet.

US-B2-8388184 discloses a carpet having a baking layer and a pile comprising yarns, filaments or fibers, and including a plurality of LEDs arranged to generate light.

OLED lamps are operated by direct electrical current (DC) and an OLED lamp can be made as a layer, however this layer is very sensitive to compression as well as to tension. The light emissive layer of the OLED is situated between two electrodes wherein the current flows through the light emissive layer. During compression the light emissive layer may be squeezed which causes the two electrodes to contact each other and thereby trigger a short circuit.

The OLED layer is therefore easily destroyed and stops functioning because the light emissive layer is punctured when exposed to compression and/or torn apart when exposed to tension. This could for example occur when pressing or stepping on the layer. The OLED lamps therefore need to be protected by a stiff cover layer that protects the OLED lamp from deformation and therefore create the same problems as the LED.

There is therefore a need for a thin, robust, lightweight and flexible lamp that can be integrated into a carpet and wherein the lamp emits enough light and is integrated.

### Summary of invention

The object of the invention is achieved by a carpet for a vehicle comprising at least one backing layer and a pile having a front and rear side, wherein the pile comprises yarns and/or filaments and/or staple fibers, characterised in that the carpet further comprises at least one area comprising a flexible multilayer comprising, a transparent conductive layer facing the pile, a dielectric layer, a light emitting layer comprising electroluminescent material situated directly in between the transparent conductive layer and the dielectric layer, a second conductive layer adjacent to the dielectric layer facing away from the pile and wherein the second conductive layer is not in contact with the transparent conductive layer, and wherein the flexible multilayer is connectable to means for conducting alternating electrical current (AC) such that the light emitting layer comprising electroluminescent material emits light in response to the alternating electrical field (AC) and wherein emitted light shines through the pile from the rear side to the front side, and wherein the at least one backing layer is a transparent or translucent impervious thermoplastic flexible layer situated between the front side of the pile and the flexible multilayer wherein at least some of the yarns and/or filaments and/or staple fibers contact the transparent or translucent impervious thermoplastic flexible layer preferably being partly embedded in the transparent or translucent impervious thermoplastic flexible layer.

Preferably the flexible multilayer consists of a transparent conductive layer facing the pile, a dielectric layer, a light emitting layer comprising electroluminescent material situated directly in between the transparent conductive layer and the dielectric layer, a second conductive layer adjacent to the dielectric layer facing away from the pile and wherein the second conductive layer is not in contact with the transparent conductive layer.

The object of the invention is also achieved by a carpet for a vehicle comprising at least one backing layer and a pile having a front and rear side, wherein the pile comprises yarns and/or filaments and/or staple fibers, characterised in that the carpet further comprises at least one area comprising a flexible multilayer comprising, a transparent conductive layer facing the pile, a second conductive layer, a dielectric light emitting layer comprising electroluminescent material situated directly in between the transparent conductive layer and the second conductive layer, and wherein the second conductive layer is not in contact with the transparent conductive layer, and wherein the flexible multilayer is connectable to means for conducting alternating electrical current (AC) such that the light emitting layer comprising electroluminescent material emits light in response to the alternating electrical field (AC) and wherein emitted light shines through the pile from the rear side to the front side, and wherein the at least one backing layer is a transparent or translucent impervious thermoplastic flexible layer situated between the front side of the pile and the flexible multilayer wherein at least some of the yarns and/or filaments and/or staple fibers contact the transparent or translucent impervious thermoplastic flexible layer preferably being partly embedded in the transparent or translucent impervious thermoplastic flexible layer (3).

Preferably the flexible multilayer consist of a transparent conductive layer facing the pile, a second conductive layer, a dielectric light emitting layer comprising electroluminescent material situated directly in between the transparent conductive layer and the second conductive layer, and wherein the second conductive layer is not in contact with the transparent conductive layer.

The carpet may be a moulded three dimensional part formed to follow the shape of the body of the vehicle or may be a flat part such as an option mat. The front side of the pile is facing the interior of the vehicle, when the carpet is mounted in the vehicle.

The transparent or translucent impervious thermoplastic flexible layer is guiding the light from the flexible multilayer to the pile and is also protecting the flexible multilayer since the layer is impervious to liquids and moisture. The transparent or translucent impervious thermoplastic flexible layer is to be understood to be a transparent impervious thermoplastic flexible layer or a translucent impervious thermoplastic flexible layer. Both the transparent and translucent layer allows light to pass through and both layers have light guiding effect. A translucent layer scatters the light slightly more than a transparent layer and therefore creates a slightly more uniform lighting effect, by compensating any irregularity of the distribution of the phosphors in the light emitting layer. A transparent layer allows more light to passing through compared to a translucent layer resulting in a higher light intensity at the pile front side.

The flexible multilayer is here also referred to as electroluminescent lamp or EL lamp.

Surprisingly the EL lamp according to the invention is not sensitive to deformation and compression and there is very low risk of short circuit due to a punctured layer. Due to the transparent or translucent impervious thermoplastic flexible layer tightly bonding the EL lamp to the rear side of the carpet, the light is guided to the pile. In the areas of the carpet where the EL lamp is present the light guiding effect of the transparent or translucent impervious thermoplastic flexible layer enables the light to penetrate the pile evenly over the surface of the pile above the EL lamp.

Preferably the carpet is a tufted carpet, a needle punched carpe, a carpet with a flocked surface, a Dilour carpet or an option mat, also referred to as floor mat.

The carpet preferably further comprises a permeable second backing layer being a primary backing (13) and/or further comprises a permeable locking layer (19).

The transparent or translucent impervious thermoplastic flexible layer is the at least one backing layer of the carpet and preferably the carpet also comprises an additionally permeable second backing layer being a primary backing layer. The primary backing layer is preferably transparent or translucent and the pile is preferably going through the primary backing. If the carpet comprises a primary backing layer, this backing layer is preferably situated closest to the front side of the pile.

Preferably the carpet also comprises a locking layer, locking the yarns and/or filaments and/or staple fibers. The transparent or translucent impervious thermoplastic flexible layer may also have the function as locking layer. In this case no additional locking layer is required.

This permeable locking layer preferably comprises latex and/or low density polyethylene (LDPE) or hotmelt adhesive and is preferably also translucent or transparent. The transparent or translucent impervious thermoplastic flexible layer can penetrate the locking layer during production and contact the yarns and/or filament and/or staple fibers. More preferably the yarns and/or filament and/or staple fibers are partly embedded into the transparent or translucent impervious thermoplastic flexible layer (3). Since the yarns and/or filaments and/or staple fibers are contacting the transparent or translucent impervious thermoplastic flexible layer (3) light is more efficiently guided to the pile and consequently more light is transmitted through the pile.

By permeable it should be understood that the layer is permeable such that the transparent or translucent impervious thermoplastic flexible layer may have at least partly penetrated into the pile, which further improves the transfer of the light through the pile. This is especially effective when the pile comprise transparent or filaments and/or staple fibers where the light guiding effect is even higher.

Preferably the transparent or translucent impervious thermoplastic flexible layer has a viscosity between 3000 and 50000 mPa.s, preferably between 4000 and 20000 mPa.s, preferably between 5000 and 10000 mPa.s measured according to ISO 11443:2014.

The viscosity is measured according to the current ISO 11443 and the viscosity value is preferably taken at the shear rate of 1000 s⁻¹.

The viscosity is measured at a certain temperature depending on the polymer. Which temperature to use is known in the literature and known from material data sheets as well as indicated in the ISO 11443:2014. For example for a PE material is normally measured at 190 degrees Celsius and PET normally at 275 degrees Celsius.

If the polymer is unknown or where the material is a mix of different polymers and the temperature is not know from the material data sheet the measurement may be done at 70 degrees Celsius above the peak melting temperature. The peak melting temperature may be determined by measurements according to the current ISO 11357-3.

The transparent or translucent impervious thermoplastic flexible layer with viscosity according to invention softens when applying heat during production of the carpet, and surprisingly has the ability to take the shape of the carpet as well as the ability to be shaped around irregularities of the pile's rear side and to adhere closely to both the flexible multilayer as well as to the pile. Furthermore due to the viscosity in the range according to the invention, the yarns and/or filaments and/or staple fibers at the rear side of the pile may not only contact the transparent or translucent impervious thermoplastic flexible layer but also partly be embedded into the transparent or translucent impervious thermoplastic flexible layer, which improves the transfer of the light from the EL lamp to the pile and thereby increasing the light passing through the pile resulting in a stronger light intensity at the front side of the pile.

Preferably the transparent or translucent impervious thermoplastic flexible layer has an elastic modulus in the range of 1 to 200 MPa, preferably 20 to 150 MPa, Preferably 30 to 100 MPa measured according to the current ISO 527. For layers with a thickness of 1 mm or thicker the ISO 527-2 is used (sample type 5A or 5B) and for layers with a thickness smaller than 1 mm the ISO 527-3 is used (sample type 5).

Surprisingly a transparent or translucent impervious thermoplastic flexible layer according to the invention with an elastic modulus in the range of 1 to 200 MPa, preferably 20 to 150 MPa, preferably 30 to 100 MPa, provides elasticity during deformation, such as when standing on the carpet while stepping in or out of the vehicle or placing heavy items on the carpet, while ensuring that the flexible multilayer adheres tightly to the carpet also during the deformation and prevents delamination of the flexible multilayer or at least the risk for delamination is significantly reduced.

During deformation of the carpet also the transparent or translucent impervious thermoplastic flexible layer is deformed and absorbs some of the forces which also prevents delamination or at least significantly reduce the risk for delamination of the flexible multilayer.

Due to the support of the transparent or translucent impervious thermoplastic flexible layer and the thereby reduced mechanical stress in the flexible multilayer, the flexible multilayer can better withstand large deformation.

A close bond of the flexible multilayer to the carpet ensures that the required amount of light shines through the pile. A delamination would significantly reduce the amount of light passing through the pile and thereby reduce the performance of the flexible multilayer.

Preferably the transparent or translucent impervious thermoplastic flexible layer (3) is a viscoelastic layer. The EL lamp might generate some noise due to resonances in layers of the EL lamp behaving like a capacitor excited by alternating electric fields when connected to the AC power supply and surprisingly a transparent or translucent impervious thermoplastic flexible viscoelastic layer has a damping effect reducing the noise of the EL lamp. The transparent or translucent impervious thermoplastic flexible viscoelastic layer absorbs the vibrations from the EL lamp and converts the energy into heat thereby reducing the radiated noise. The generated heat is however negligible and not warming up the EL lamp.

The dielectric layer is an electrical insulator between the two conductive layers preventing any direct contact between the conductive layers. When a dielectric layer is placed in an electric field, electric charges do not flow through the material as they do in an electrical conductor but only slightly shift from their average equilibrium positions causing dielectric polarization. Because of dielectric polarization, positive charges are displaced in the direction of the field and negative charges shift in the opposite direction. Since the current is not flowing through the dielectric layer, a lamp construction with a dielectric layer only works with AC and not DC power.

Means for conducting alternating electrical current AC may be the vehicle's AC power supply or the vehicle's DC supply including a converter to AC power.

When the carpet is mounted in a vehicle, for example a car, the conductive layers are connected to electric power and since vehicles normally have DC power, an adapter/converter is mounted in between the vehicle's electric power supply and the carpet, converting the power to AC at for example 400 to 800 Hz and at 115 to 150 V. The alternating voltage applied across the conductive layers activates the electroluminescent material which then emits light as long as the voltage fluctuates.

The electroluminescent material is preferably embedded in a polymer layer and thereby the electroluminescent material is protected from liquid, moisture and mechanical impact. Since the light emitting layer is flexible, the electroluminescent material is protected in the polymer also during deformation and the lamp will function during deformation.

The electroluminescent material is preferably a phosphor. Phosphors are usually made from a suitable host material coated with an activator material, also referred to as dopant.

Host materials are typically oxides or sulfides like zinc oxide (ZnO), zinc sulfide (ZnS), zinc cadmium sulfide (Zn,Cd)S, oxysulfides, vanadates, phosphates and rare-earth oxalates, ultrapure alkaline-earth metal carbonates and alkaline-earth orthosilicates.

Typical activators are copper (Cu), silver (Ag), chlorine (CI) or Manganese (Mn), Lanthanide, gold, halogens or a mixture thereof.

The colour of the light depends on the selected host and activator. The phosphors may also be a mix of different phosphors materials. For example ZnS:Mn is orange red, ZnS:Ag is blue, ZnS:Cu is green, ZnS:Ln, depending on the Lanthanide can be red to blue green. Main extended phosphors are copper doped zinc sulfide (ZnS:Cu), manganese doped zinc sulfide(ZnS:Mn) or silver-activated zinc sulfide (ZnS:Ag). Phosphors can also be activated with several dopants, for example ZnS:Cu,CI, which are blue, blue-green or green emitting , ZnS:Mn,CI , ZnS:Cu,Mn, ZnS:Cu,Mn,CI, orange-yellow-emitting, or they can consist of a blend of these phosphors to be white-emitting.

Preferably the phosphors are encapsulated by chemical vapour deposition (CVD) in an aluminium oxide (Al₂O₃) protective coating for a long life resistance. Major used materials are zinc sulphide (ZnS:Cu,CI, ZnS:Ag,CI), yttrium oxysulphide (Y₂O₂S:Eu³⁺) and yttrium oxide (Y₂O₃:Eu ³⁺) and their variants.

Surprisingly the flexible multilayer (EL lamp) according to the invention can be made very thin and withstand fatigue and deformation caused for example when pressing on the carpet for example when standing on the carpet while stepping in or out of the vehicle or placing heavy items on the carpet.

Surprisingly the EL lamp in a carpet according to the invention generates negligible amount of heat, compared to for example LED or OLED lamps, and does not need any cooling or any form of thermal management.

Preferably a flexible substrate layer is directly connected to the second conductive layer and preferably the flexible substrate layer is impervious. The flexible substrate layer is preferably also connected to the transparent or translucent impervious thermoplastic flexible layer around the EL lamp thereby encapsulating the EL lamp between the flexible substrate layer and the transparent or translucent impervious thermoplastic flexible layer. The flexible substrate layer is preferably impervious to liquid and moisture ensuring that the EL lamp is protected from liquid and moisture.

There may also be a second transparent or translucent impervious thermoplastic flexible layer situated between the flexible multilayer and the transparent or translucent impervious thermoplastic flexible layer. This second transparent or translucent impervious thermoplastic flexible layer may have the primary function as a protective layer during transport and storage of the flexible multilayer.

Preferably at least one of the layers, transparent or translucent impervious thermoplastic flexible layer, transparent conductive layer, the light emitting layer comprising electroluminescent material, the dielectric layer or the dielectric light emitting layer comprising electroluminescent material, second conductive layer and or the flexible substrate layer, comprise a polymer selected from the group consisting of polyolefin such as polypropylene (PP) or polyethylene (PE) or propylene ethylene copolymers (CoPE) or high density polyethylene (HDPE) or low density polyethylene (LDPE) or linear low density polyethylene (LLDPE) or maleic anhydride grafted polyolefin (MAPE) or maleic anhydride grafted polyolefin elastomer, polyethylene terephthalate (PET), copolyester (CoPET), polyamide (PA6, PA66, PA12), copolyamide (CoPA), thermoplastic elastomers (TPE) such as styrenic block copolymers (TPS) or polyolefin elastomers (POE), thermoplastic polyolefin elastomers (TPO or TPE-o), Thermoplastic Vulcanizates (TPE-v or TPV), Thermoplastic polyurethanes (TPU), Thermoplastic copolyester (TPC or TPE-E), Thermoplastic polyamides (TPA or TPE-A) and latex. Any of the layers may also be a mix of two or more polymers or copolymers preferably a mixture of the above mentioned polymers.

The transparent or translucent impervious thermoplastic flexible layer according to the invention more preferably comprises thermoplastic elastomers (TPE) such as styrenic block copolymers (TPS) or polyolefin such as propylene ethylene (PE) or polyolefin elastomers (POE).

Thermoplastic elastomers (TPE) such as the styrenic block copolymers (TPS) offer clear transparency and excellent elasticity, exhibiting similar properties to that of rubbers. Therefore such polymers thanks to their viscoelasticity offers in addition to a good light guidance through the carpet also good mechanical protection of the EL lamp, for example from impact forces. Additionally, these above listed polymers, preferably TPE or amorphous polyolefin based materials are very appropriate inside the car cockpits thanks to their good compliance to for example the restriction of hazardous substances directive.

The thickness of the transparent or translucent impervious thermoplastic flexible layer is preferably between 0.2 mm and 5 mm, preferably between 0.5 mm and 3 mm, preferably between 1 mm and 2 mm. Surprisingly the transparent or translucent impervious thermoplastic flexible layer according to the invention has a good light guiding effect also for larger thicknesses such as up to 5 mm.

Preferably at least one of the second conductive layer or flexible substrate layer (8) or the dielectric layer is a reflective opaque layer, preferably metallic-like or highly white or light colored. The EL lamp is more effective when at least one of these layers are able to reflect light since the light generated in the light emitting layer comprising electroluminescent material is then not directed in two directions but reflected by the reflective opaque layer directing the light towards the pile thereby increasing the light intensity of the EL lamp and consequently more light will pass through the pile.

Preferably at least one of the layers of the flexible multilayer, preferably all of the layers of the flexible multilayer and/or at least one of the layers, transparent or translucent impervious thermoplastic flexible layer and flexible substrate layer are printed layers preferably printed by screen printing. The layers may be printed on a flat substrate and this substrate may be either the transparent or translucent impervious thermoplastic flexible layer or the flexible substrate layer.

Screen printing, also known as silk-screening or serigraphy, is known in the art for other applications and has the advantages that it has low cost and that it allows to adjust the thickness of the layers accurately which is important in order for the EL lamp to function properly.

Furthermore screen printing is a suitable method to create patterns and in this way the EL lamp can be created in the shape of for example a logo or a text message or any other shape.

Pad printing is less preferred since for example with this method only very thin layers of less than 10 micrometres can be created and in order to get a thickness above 10 micrometres the pad printing process has to be repeated until the required thickness is achieved which increases the production time and cost.

In a preferred embodiment the layers of the flexible multilayer is printed on the flexible substrate layer. The printed EL lamp is then laminated by the transparent or translucent impervious thermoplastic flexible layer to the pile.

The EL lamp is a very thin flexible multilayer only having a negligible effect on the total thickness of the carpet. Preferably the thickness of the flexible multilayer is less than 0.5 mm, preferably less than 0.3 mm, preferably between 0.015 mm and 0.1 mm, preferably between 0.01 mm and 0.075 mm.

The EL lamp is flexible and can be shaped during the production of the carpet in order to follow the shape of the carpet.

The area weight of the pile is preferably at least 150 gsm (grams per square meter), preferably at least 250 gsm, preferably between 400 gsm and 2000 gsm, preferably between 400 and 1200 gsm, preferably between 400 and 800 gsm.

Preferably the thickness, also referred to as the height, of the pile is between 2.5 mm and 10 mm, preferably between 4 mm and 8 mm. The height of the pile is measured from the backing closest to the front side of the pile.

Preferably the carpet according to the invention comprising at least one area where at least some of the yarns comprise transparent or translucent filaments and/or staple fibers, preferably these yarns comprise between 5 and 60%, preferably between 10 and 50%, preferably between 20 and 40% transparent or translucent filaments or staple fibers wherein the percentage is calculated as a percentage of the total cross section surface area of the yarn.

The cross section surface area of the individual filaments or staple fibers can be calculated from the diameter. The average filament or staple fiber diameter can, for example, be estimated by microscopy or by calculation from the linear density expressed in for example deniers, tex or dtex value.

If the pile comprises yarns, the yarns may comprise transparent or translucent filaments or staple fibers as well as non-transparent filaments or staple fibers. Non-transparent filaments or staple fibers should be understood to also be non-translucent.

Transparent or translucent filaments or staple fibers are especially effective for dark coloured carpets such as black carpets.

Preferably the transparent or translucent or non-transparent/non translucent filaments or staple fibers comprise polyethylene terephthalate (PET) and/or polyamide (PA6, PA66, PA12).

In order to allow enough light to pass through the carpet pile the density of the pile, e.g. the yarn stitches per centimetre, may be reduced and/or the needle gauge may be coarser for a tuft carpet, or e.g. the needling strokes per square centimeter and/or the needling penetration may be reduced for a needle-punched carpet since a too dense carpet pile may not allow enough light to pass through the carpet pile. However when using transparent or translucent filaments or staple fibers the opposite effect may be achieved, which means that the light intensity is increasing with increased pile density since also the density of transparent or translucent filaments or staple fibers is increasing and thereby improving the light transmittance.

To make it easier for the light to pass through the pile, the height of the pile may be locally reduced.

For carpets comprising a dense thick additional backing layer, in addition to the at least one backing layer being the transparent or translucent impervious thermoplastic flexible layer, the thickness of the additional backing layer may be locally reduced.

The carpet according to the invention may comprise a fibrous or foam layer wherein the flexible multilayer is situated between the fibrous or foam layer and the pile.

The carpet according to the invention may be produced with various methods known in the art.

Preferably the method for producing the carpet according to the invention comprises the steps of
a. providing a carpet with a pile optionally with a primary backing and/or locking layer, a flexible multilayer and material forming the transparent or translucent impervious thermoplastic flexible layer according to the invention.
b. optionally heating at least the rear side of the carpet preferably in a contact heater or in an infra-red oven, or in a hot air circulating oven.
c. optionally moulding the carpet into a three dimensional shape through a standard cold-moulding process or tempered moulding process.
d. optionally removing the moulded carpet from the mould and place the carpet in a fixture or in a different mould.
e. applying the material forming the transparent or translucent impervious thermoplastic flexible layer in molten form on the rear side of the carpet at the location where the flexible multilayer is to be positioned.
f. positioning the flexible multilayer on the molten material forming the transparent or translucent impervious thermoplastic flexible layer.
g. pressing the flexible multilayer towards the back of the carpet in order to laminate the flexible multilayer to the carpet.
h. optionally moulding, gluing or welding a decoupling layer to the back side of the carpet wherein the flexible multilayer is situated in between the decoupling layer and the carpet.

Dimensions such as thicknesses may be measured using standard methods known in the art.

Any range given should include the starting and end points as well as normal expected deviations in the measurements. Start and end point values of different ranges may be combined.

Further embodiments of the invention may be derived from the description also by combining the different embodiments and examples of the invention and may also be derived from the description of the embodiments shown in the figures. The figures are schematic pictures and are not necessarily in scale.

### Brief description of drawings

Figure 1 and 2 show a schematic cross section of a carpet (10) for a vehicle with the EL lamp according to the invention.
Figure 3 shows a schematic cross section of a carpet (10) for a vehicle with the EL lamp according to the invention wherein the EL lamp is encapsulated.
Figure 4 shows a schematic cross section of a carpet (10) with the EL lamp according to the invention.
Figure 5 shows a schematic cross section of a carpet (10) being a tufted carpet with the EL lamp according to the invention.
Figure 6 shows a schematic cross section of a carpet (10) being a tufted carpet with partly reduced pile height and with the EL lamp according to the invention.
Figure 7 shows a schematic cross section of a carpet (10) with partly reduced backing layer and with the EL lamp according to the invention.
Figure 8 shows a schematic cross section of yarn (20).
Figure 9 shows a schematic top view of a carpet with an EL lamp in operation.
Figure 10A and 10B show a schematic top view of a carpet with an EL lamp in operation.

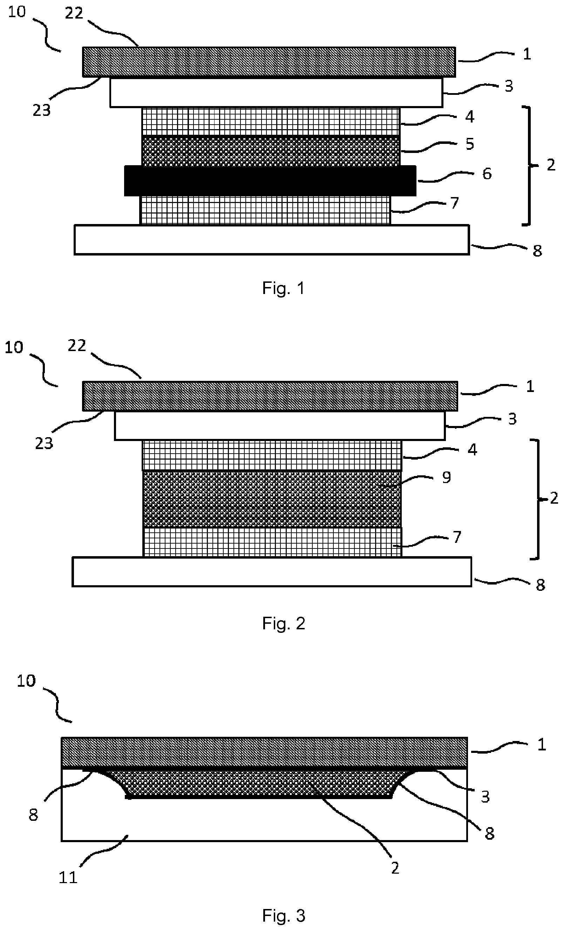

Figure 1 shows a schematic cross section of a carpet (10) for a vehicle with the EL lamp according to the invention comprising a pile (1), having a front (22) and rear (23) side and a flexible multilayer (2). The front side is facing the interior when the carpet is mounted inside the vehicle. The flexible multilayer (2) consists in the example of a transparent conductive layer (4), a light emitting layer comprising electroluminescent material (5), a dielectric layer (6) and a second conductive layer (7). The transparent or translucent impervious thermoplastic flexible layer (3) bonds the flexible multilayer (2) to the pile and ensures a good light guidance and light transfer through the pile. Optionally a flexible substrate layer (8) is connected to the flexible multilayer (2) and preferably this layer is impervious to liquids and moisture. The flexible substrate layer (8) is preferably lager than the flexible multilayer (2) and laminated against the transparent or translucent impervious thermoplastic flexible layer (3) outside the area of the flexible multilayer (2) thereby encapsulating and sealing the flexible multilayer (2) from liquids and moisture. The AC power is connected to the transparent conductive layer (4) and the second conductive layer (7). The layers of the flexible multilayer (2) are preferably printed on the transparent or translucent impervious thermoplastic flexible layer (3) or the flexible substrate layer (8).

Figure 2 shows a schematic cross section of a carpet (10) according to the invention similar to the carpet as shown in figure 1. In figure 2 the light emitting layer comprising electroluminescent material and the dielectric layer is replaced by a dielectric light emitting layer comprising electroluminescent material (9) wherein the functions of the two layers are combined in one layer. Otherwise the layers and numbering are the same as in figure 1.

Figure 3 shows a schematic cross section of a carpet (10) according to the invention. The layers of the flexible multilayer (2) are printed one by one to a flexible substrate layer (8) and the transparent or translucent impervious thermoplastic flexible layer (3) is bonding the flexible multilayer (2) to the carpet and the pile (1). Both the flexible substrate layer (8) and the transparent or translucent impervious thermoplastic flexible layer (3) extends further than the flexible multilayer (2) and are laminated together and encapsulating the flexible multilayer (2) and thereby protecting the EL lamp from liquids and moisture. The flexible multilayer (2) is situated between the pile (1) and a decoupling layer (11) being a porous foam layer or a porous felt layer.

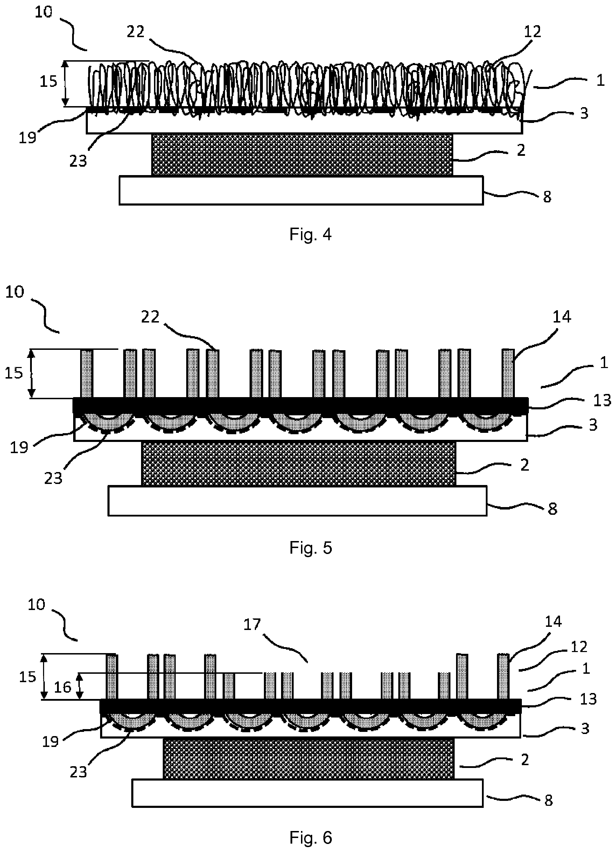

Figure 4 shows a schematic cross section of a carpet (10) with the EL lamp according to the invention. The pile (1) comprises staple fibers (12), and wherein the carpet further comprise a locking layer (19), indicated by the thick dashed line. The locking layer is preferably permeable and the transparent or translucent impervious thermoplastic flexible layer can penetrate through the locking layer during production and the staple fibers of the pile (1) are contacting the transparent or translucent impervious thermoplastic flexible layer (3) and are even partly embedded in the transparent or translucent impervious thermoplastic flexible layer (3). The flexible multilayer (2) is situated between the transparent or translucent impervious thermoplastic flexible layer (3) and a flexible substrate layer (8). Since the staple fibers are partly contacting and being partly embedded into the transparent or translucent impervious thermoplastic flexible layer (3) the light from the flexible multilayer (2) is efficiently transmitted through the carpet pile (1) from the rear (23) side to the front (22) side of the pile (1). The height (15) of the pile (1) is measured from the backing closest to the front side of the pile.

Figure 5 shows a schematic cross section of a carpet (10) being a tufted carpet with the EL lamp according to the invention. The pile (1) comprises yarns (14) and wherein the carpet further comprises a locking layer (19), indicated by the thick dashed line. The locking layer is preferably permeable and the transparent or translucent impervious thermoplastic flexible layer can penetrate through the locking layer during production and the yarns or filament or staple fibers of the pile (1) are contacting and are even partly being embedded in the transparent or translucent impervious thermoplastic flexible layer (3). The carpet further comprises a primary backing layer (13) situated between locking layer (19) and the front (22) side of the pile (1). The flexible multilayer (2) is situated between the transparent or translucent impervious thermoplastic flexible layer (3) and a flexible substrate layer (8). Since the yarns are contacting and are even partly embedded into the transparent or translucent impervious thermoplastic flexible layer (3) the light from the flexible multilayer (2) is efficiently transmitted through the carpet pile (1) from the rear (23) side to the front (22) side of the pile (1). The height (15) of the pile (1) is measured from backing closest to the front side, for example the primary backing (13).

Figure 6 shows a similar carpet (10) according to the invention as shown in figure 5 with the only difference that the carpet has at least one area (17) with reduced pile height (16). Otherwise the layers and numbering are the same as in figure 5. The reduced pile height is further improving the transmittance of the light through the carpet pile.

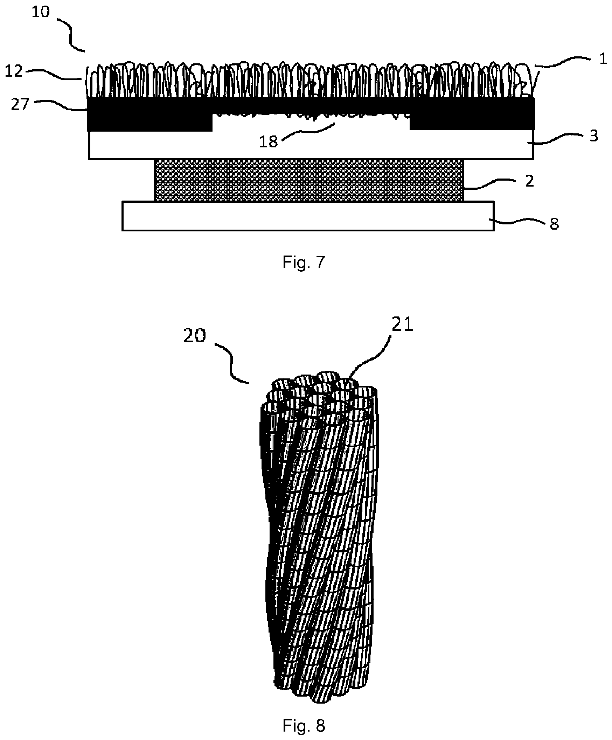

Figure 7 shows a similar carpet (10) according to the invention as shown in figure 4 wherein the carpet comprise an additional backing (27) and wherein the carpet has at least one area (18) of the additional backing (27) with reduced thickness. If the additional backing (27) is very thick and or dense it may be necessary to locally reduce the thickness of the backing where the flexible multilayer (2) is situated in order to ensure that enough light can pass through. In this area the thickness of the transparent or translucent impervious thermoplastic flexible layer (3) may, at least locally, be thicker in order to compensate for the reduced thickness of the backing.

Figure 8 shows a schematic cross section of a yarn (20) wherein the yarn comprises filaments or staple fibers. The cross section surface area (21) of each filament or staple fiber can be calculated from the measured filaments or staple fibers diameter or or the linear density expressed in for example deniers, tex, or dtex value. Preferably the yarns of the carpet pile comprise transparent or translucent filaments or staple fibers and the percentage transparent filaments or staple fibers is calculated as a percentage of the total cross section surface area of the yarn. The total cross section surface area of the yarn is the total cross section surface area (21) of all filament or staple fiber forming the yarn.

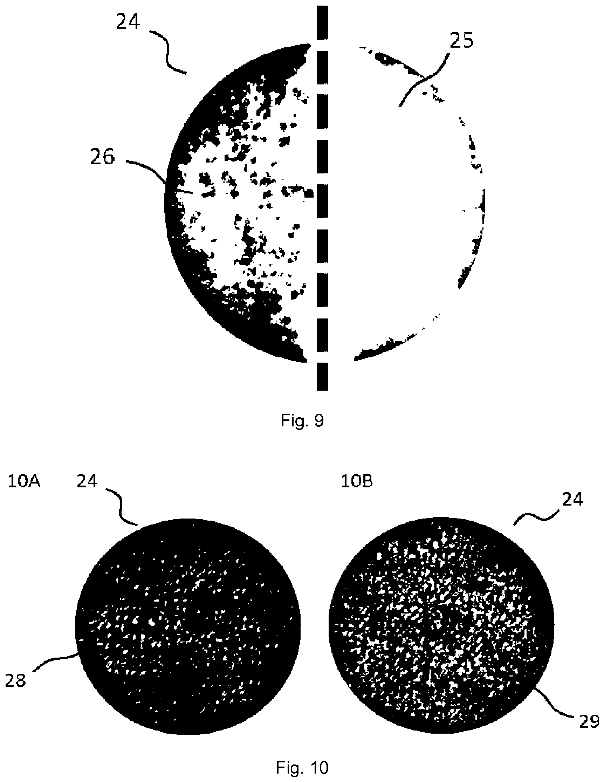

Figure 9, 10A and 10B show schematic top views (24) of carpets with an EL lamp in operation. The figures are based on photos that have been recolored to back and white, wherein the white areas are areas where light shines through the carpet and black areas or spots are places when no light or very limited amount of light shines through the carpet pile.

Figure 9 shows a blond tufted carpet with a pile and a primary backing layer (not shown in the figure), for example as shown in figure 5. The sample is divided in two areas, separated in the figure by the dashed line. The right area (25) is according to the invention wherein the EL lamp is laminated to the carpet with the transparent or translucent impervious thermoplastic flexible layer and wherein the yarns are partly embedded in the transparent or translucent impervious thermoplastic flexible layer. The left area (26) of the sample is not according to the invention and has the EL lamp connected directly to the carpet without the transparent or translucent impervious thermoplastic flexible layer. Also the right area (25) has some back spots at the edge due to delamination of the lamp during sample preparation.

The tufted carpet has a pile with an area weight of 380 gsm and a pile height of 3.5 mm and 58 stitches/10cm in the machine direction and 5/64 stitching gauge in the cross direction. The carpet has a white 120 gsm PET/CoPET primary backing and a permeable locking layer consisting of 70 gsm latex combined with 260 gsm LDPE. The transparent or translucent impervious thermoplastic flexible layer (3), not shown in the figure, is a 2 mm modified PP layer. The elastic modulus was measured according to the current ISO 527-2, sample type 5A. The following test settings were used: clamping distance 50mm, gauge length 20mm, Pre-load 0.5N, E-Modulus evaluation range 0.05-0.25%, E-Modulus test speed 1mm/min. The elastic modulus was measured to 3 MPa. The viscosity was measured to 6000 mPa.s according to ISO 11443:2014.

The EL lamp is according to the invention as shown in figure 1, with a light emitting layer comprising electroluminescent material (5) wherein the electroluminescent material is copper doped zinc sulfide (ZnS:Cu).

As can clearly be seen in figure 9 the transparent or translucent impervious thermoplastic flexible layer bonding the EL lamp to the carpet increases the light passing through the carpet compared to a carpet without the transparent or translucent impervious thermoplastic flexible layer.

Figure 10A and 10B show a black tufted carpet with a pile and a primary backing layer (not shown in the figure), for example as shown in figure 5. The carpet (28) in figure 10A does not have the transparent or translucent impervious thermoplastic flexible layer (3) and the carpet (29) in figure 10B is according to the invention where the EL lamp is laminated to the carpet by the transparent or translucent impervious thermoplastic flexible layer (3) and where at least some of the yarns are partly embedded into the transparent or translucent impervious thermoplastic flexible layer (3).

The tufted carpet has a dense pile with an area weight of 1120 gsm and a pile height of 3.5 mm and 43 stitches/10cm in the machine direction and 1/10 stitching gauge in the cross direction. The carpet has a permeable beige PP primary backing and a locking layer with total area weight of 130 gsm. The yarns of the carpet pile comprise 42 % transparent PA filaments and 58% non-transparent black PA filaments. The yarns comprise 384 non-transparent filaments, with diameter 33.7 micrometres and 8 transparent filaments with diameter 200 micrometres.

The transparent or translucent impervious thermoplastic flexible layer (3), (not shown in the figure), is a 2 mm modified PP layer. The elastic modulus was measured according to the current ISO 527-2, sample type 5A. The following test settings were used: clamping distance 50 mm, gauge length 20mm, Pre-load 0.5N, E-Modulus evaluation range 0.05-0.25%, E-Modulus test speed 1mm/min. The elastic modulus was measured to 3 MPa. The viscosity was measured to 6000 mPa.s according to ISO 11443:2014.

The EL lamp is according to the invention as shown in figure 1, with a light emitting layer comprising electroluminescent material (5) wherein the electroluminescent material is copper doped zinc sulfide (ZnS:Cu).

The transparent or translucent impervious thermoplastic flexible layer bonding the EL lamp to the carpet increases the light passing through the carpet compared to a carpet without the transparent or translucent impervious thermoplastic flexible layer. The effect of the transparent yarn is much more effective when the yarns are partly embedded into the transparent or translucent impervious thermoplastic flexible layer (3).

## Claims

1. A carpet (10) for a vehicle comprising at least one backing layer and a pile (1) having a front and rear side, wherein the pile comprises yarns (14) and/or filaments and/or staple fibers (12), **characterised in that** the carpet further comprises at least one area comprising a flexible multilayer (2) comprising, a transparent conductive layer (4) facing the pile, a dielectric layer (6), a light emitting layer comprising electroluminescent material (5) situated directly in between the transparent conductive layer (4) and the dielectric layer (6), a second conductive layer (7) adjacent to the dielectric layer facing away from the pile (1) and wherein the second conductive layer (7) is not in contact with the transparent conductive layer (4), and wherein the flexible multilayer (2) is connectable to means for conducting alternating electrical current (AC) such that the light emitting layer comprising electroluminescent material (5) emits light at least through the pile (1) in response to the alternating electrical field (AC), and wherein the at least one backing layer is a transparent or translucent impervious thermoplastic flexible layer (3) situated between the front side of the pile (1) and the flexible multilayer (2) wherein at least some of the yarns (14) and/or filaments and/or staple fibers (12) contact the transparent or translucent impervious thermoplastic flexible layer (3) preferably being partly embedded in the transparent or translucent impervious thermoplastic flexible layer (3).

2. A carpet (10) for a vehicle comprising at least one backing layer and a pile (1) having a front and rear side, wherein the pile comprises yarns (14) and/or filaments and/or staple fibers (12), **characterised in that** the carpet further comprises at least one area comprising a flexible multilayer (2) comprising, a transparent conductive layer (4) facing the pile, a second conductive layer (7), a dielectric light emitting layer comprising electroluminescent material (9) situated directly in between the transparent conductive layer (4) and the second conductive layer (7), and wherein the second conductive layer (7) is not in contact with the transparent conductive layer (4), and wherein the flexible multilayer (2) is connectable to means for conducting alternating electrical current (AC) such that the light emitting layer comprising electroluminescent material (5) emits light at least through the pile (1) in response to the alternating electrical field (AC), and wherein the at least one backing layer is a transparent or translucent impervious thermoplastic flexible layer (3) situated between the front side of the pile (1) and the flexible multilayer (2) wherein at least some of the yarns (14) and/or filaments and/or staple fibers (12) contact the transparent or translucent impervious thermoplastic flexible layer (3) preferably being partly embedded in the transparent or translucent impervious thermoplastic flexible layer (3).

3. A carpet for a vehicle according to one of the preceding claims wherein the transparent or translucent impervious thermoplastic flexible layer (3) has a viscosity between 3000 and 50000 mPa.s, preferably between 4000 and 20000 mPa.s, preferably between 5000 and 10000 mPa.s measured according to ISO 11443.

4. A carpet for a vehicle according to one of the preceding claims wherein the carpet is a tufted carpet, a needle punched carpe, a Dilour carpet, a carpet with a flocked surface or an option mat.

5. A carpet for a vehicle according to one of the preceding claims further comprising a permeable second backing layer being a primary backing (13) and/or further comprising a permeable locking layer (19).

6. A carpet for a vehicle according to one of the preceding claims wherein the transparent or translucent impervious thermoplastic flexible layer (3) has an elastic modulus in the range of 1 to 200 MPa, preferably 20 to 150 MPa, Preferably 30 to 100 MPa measured according to ISO 527.

7. A carpet for a vehicle according to one of the preceding claims wherein the transparent or translucent impervious thermoplastic flexible layer (3) is a viscoelastic layer.

8. A carpet for a vehicle according to one of the preceding claims wherein a flexible substrate layer (8) is directly connected to the second conductive layer (7), preferably the flexible substrate layer (8) is impervious.

9. A carpet for a vehicle according to one of the preceding claims wherein the transparent or translucent impervious thermoplastic flexible layer (3) comprise a polymer selected from the group consisting of polyolefin such as polypropylene (PP) or polyethylene (PE) or propylene ethylene copolymers (CoPE) or high density polyethylene (HDPE) or low density polyethylene (LDPE) or linear low density polyethylene (LLDPE) or maleic anhydride grafted polyolefin (MAPE) or maleic anhydride grafted polyolefin elastomer, polyethylene terephthalate (PET), copolyester (CoPET), polyamide (PA6, PA66, PA12), copolyamide (CoPA), thermoplastic elastomers (TPE) such as styrenic block copolymers (TPS) or polyolefin elastomers (POE), thermoplastic polyolefin elastomers (TPO or TPE-o), Thermoplastic Vulcanizates (TPE-v or TPV), Thermoplastic polyurethanes (TPU), Thermoplastic copolyester (TPC or TPE-E), Thermoplastic polyamides (TPA or TPE-A) and latex.

10. A carpet for a vehicle according to one of the preceding claims wherein the thickness of transparent or translucent impervious thermoplastic flexible layer (3) is between 0.2 mm and 5 mm, preferably between 0.5 mm and 3 mm, preferably between 1 mm and 2 mm.

11. A carpet for a vehicle according to one of the preceding claims wherein at least one of the second conductive layer (7), flexible substrate layer (8) or the dielectric layer (6) is a reflective opaque layer.

12. A carpet for a vehicle according to one of the preceding claims wherein the layers of the flexible multilayer (2) and or at least one of the layer's transparent or translucent impervious thermoplastic flexible layer (3) and flexible substrate layer (8) are printed layers preferably printed by screen printing.

13. A carpet for a vehicle according to one of the preceding claims wherein the area weight of the pile is at least 150 gsm, preferably at least 250 gsm, preferably between 400 gsm and 2000 gsm, preferably between 400 and 1200 gsm, preferably between 400 and 800 gsm.

14. A carpet for a vehicle according to one of the preceding claims wherein at least some of the yarns comprise transparent or translucent filaments or staple fibers, preferably these yarns comprise between 5 and 60%, preferably between 10 and 50%, preferably between 20 and 40% transparent or translucent filaments or staple fibers wherein the percentage is calculated as a percentage of cross section surface area of the yarn.

15. A carpet for a vehicle according to one of the preceding claims further comprising a fibrous or foam layer and wherein the flexible multilayer is situated between the fibrous or foam layer and the pile.

## Patentansprüche

1. Teppich (10) für ein Fahrzeug, mindestens eine Trägerschicht und einen Flor (1) umfassend, der eine Vorder- und Rückseite aufweist, wobei der Flor Fäden (14) und/oder Filamente und/oder Spinnfasern (12) umfasst, **dadurch gekennzeichnet, dass** der Teppich weiter mindestens einen Bereich umfasst, der ein flexibles Multilayer (2) umfasst, das eine transparente leitfähige Schicht (4), die dem Flor zugewandt ist, eine dielektrische Schicht (6), eine lichtemittierende Schicht, die elektrolumineszentes Material (5) umfasst, das sich direkt zwischen der transparenten leitfähigen Schicht (4) und der dielektrischen Schicht (6) befindet, eine zweite leitfähige Schicht (7) angrenzend an die dielektrische Schicht, die dem Flor (1) abgewandt ist, umfasst, und wobei die zweite leitfähige Schicht (7) nicht in Kontakt mit der transparenten leitfähigen Schicht (4) ist, und wobei das flexible Multilayer (2) an Mittel zum Leiten von Wechselstrom (AC) angeschlossen werden kann, sodass die lichtemittierende Schicht, die elektrolumineszentes Material (5) umfasst, Licht mindestens durch den Flor (1) hindurch als Reaktion auf das elektrische Wechselfeld (AC) ausgibt, und wobei die mindestens eine Trägerschicht eine transparente oder durchscheinende undurchlässige thermoplastische flexible Schicht (3) ist, die sich zwischen der Vorderseite des Flors (1) und dem flexiblen Multilayer (2) befindet, wobei mindestens einige der Fäden (14) und/oder Filamente und/oder Spinnfasern (12) die transparente oder durchscheinende undurchlässige thermoplastische flexible Schicht (3) berühren, vorzugsweise teilweise in die transparente oder durchscheinende undurchlässige thermoplastische flexible Schicht (3) eingebettet sind.

2. Teppich (10) für ein Fahrzeug, mindestens eine Trägerschicht und einen Flor (1) umfassend, der eine Vorder- und Rückseite aufweist, wobei der Flor Fäden (14) und/oder Filamente und/oder Spinnfasern (12) umfasst, **dadurch gekennzeichnet, dass** der Teppich weiter mindestens einen Bereich umfasst, der ein flexibles Multilayer(2) umfasst, das eine transparente leitfähige Schicht (4), die dem Flor zugewandt ist, eine zweite leitfähige Schicht (7), eine dielektrische lichtemittierende Schicht, die elektrolumineszentes Material (9) umfasst, die sich direkt zwischen der transparenten leitfähigen Schicht (4) und der zweiten leitfähigen Schicht (7) befindet, und wobei die zweite leitfähige Schicht (7) nicht in Kontakt mit der transparenten leitfähigen Schicht (4) ist, und wobei das flexible Multilayer (2) an Mittel zum Leiten von Wechselstrom (AC) angeschlossen werden kann, sodass die lichtemittierende Schicht, die elektrolumineszentes Material (5) umfasst, Licht mindestens durch den Flor (1) hindurch als Reaktion auf das elektrische Wechselfeld (AC) ausgibt, und wobei die mindestens eine Trägerschicht eine transparente oder durchscheinende undurchlässige thermoplastische flexible Schicht (3) ist, die sich zwischen der Vorderseite des Flors (1) und dem flexiblen Multilayer (2) befindet, wobei mindestens einige der Fäden (14) und/oder Filamente und/oder Spinnfasern (12) die transparente oder durchscheinende undurchlässige thermoplastische flexible Schicht (3) berühren, vorzugsweise teilweise in die transparente oder durchscheinende undurchlässige thermoplastische flexible Schicht (3) eingebettet sind.

3. Teppich für ein Fahrzeug nach einem der vorstehenden Ansprüche, wobei die transparente oder durchscheinende undurchlässige thermoplastische flexible Schicht (3) eine Viskosität zwischen 3000 und 50000 mPa.s, vorzugsweise zwischen 4000 und 20000 mPa.s, vorzugsweise zwischen 5000 und 10000 mPa.s entsprechend ISO 11443 gemessen, aufweist.

4. Teppich für ein Fahrzeug nach einem der vorstehenden Ansprüche, wobei der Teppich ein geknüpfter Teppich, Nadelfilzteppich, ein Delour-Teppich, ein Teppich mit geflockter Oberfläche oder eine Optionsmatte ist.

5. Teppich für ein Fahrzeug nach einem der vorstehenden Ansprüche, weiter eine durchlässige zweite Trägerschicht umfassend, die ein Primärträger (13) ist, und/oder weiter eine durchlässige Sperrschicht (19) umfassend.

6. Teppich für ein Fahrzeug nach einem der vorstehenden Ansprüche, wobei die transparente oder durchscheinende undurchlässige thermoplastische flexible Schicht (3) ein Elastizitätsmodul im Bereich von 1 bis 200 MPa, vorzugsweise 20 bis 150 MPa, vorzugsweise 30 bis 100 MPa, entsprechend ISO 527 gemessen, aufweist.

7. Teppich für ein Fahrzeug nach einem der vorstehenden Ansprüche, wobei die transparente oder durchscheinende undurchlässige thermoplastische flexible Schicht (3) eine viskoelastische Schicht ist.

8. Teppich für ein Fahrzeug nach einem der vorstehenden Ansprüche, wobei eine flexible Substratschicht (8) direkt mit der zweiten leitfähigen Schicht (7) verbunden ist, wobei die flexible Substratschicht (8) vorzugsweise undurchlässig ist.

9. Teppich für ein Fahrzeug nach einem der vorstehenden Ansprüche, wobei die transparente oder durchscheinende undurchlässige thermoplastische flexible Schicht (3) ein Polymer umfasst, das aus der Gruppe ausgewählt ist, die aus Polyolefin, wie Polypropylen (PP) oder Polyethylen (PE) oder Propylenethylen-Copolymeren (CoPE) oder Polyethylen hoher Dichte (HDPE) oder Polyethylen niedriger Dichte (LDPE) oder linearem Polyethylen niedriger Dichte (LLDPE) oder Maleinsäureanhydrit-gepfropftem Polyolefin (MAPE) oder Maleinsäureanhydrit-gepfropftem Polyolefinelastomer, Polyethylenterephthalat (PET), Copolyester (CoPET), Polyamid (PA6, PA66, PA12), Copolyamid (CoPA), thermoplastischen Elastomeren (TPE), wie Styrol-BlockCopolymeren (TPS) oder Polyolefinelastomeren (POE), thermoplastischen Polyolefinelastomeren (TPO oder TPE-o), thermoplastischen Vulkanisaten (TPE-v oder TPV), thermoplastischen Polyurethanen (TPU), thermoplastischem Copolyester (TPC oder TPE-E), thermoplastischen Polyamiden (TPA oder TPE-A) und Latex besteht.

10. Teppich für ein Fahrzeug nach einem der vorstehenden Ansprüche, wobei die Dicke der transparenten oder durchscheinenden undurchlässigen thermoplastischen flexiblen Schicht (3) zwischen 0,2 mm und 5 mm, vorzugsweise zwischen 0,5 mm und 3 mm, vorzugsweise zwischen 1 mm und 2 mm beträgt.

11. Teppich für ein Fahrzeug nach einem der vorstehenden Ansprüche, wobei mindestens eine von der zweiten leitfähigen Schicht (7), der flexiblen Substratschicht (8) oder der dielektrischen Schicht (6) eine reflektierende undurchsichtige Schicht ist.

12. Teppich für ein Fahrzeug nach einem der vorstehenden Ansprüche, wobei die Schichten des flexiblen Multilayers (2) und oder mindestens eine der Schichten, die transparente oder die durchscheinenden undurchlässige thermoplastische flexible Schicht (3) und die flexible Substratschicht (8) bedruckte, vorzugsweise durch Siebdruck bedruckte Schichten sind.

13. Teppich für ein Fahrzeug nach einem der vorstehenden Ansprüche, wobei das Flächengewicht des Flors mindestens 150 gsm, vorzugsweise mindestens 250 gsm, vorzugsweise zwischen 400 gsm und 2000 gsm, vorzugsweise zwischen 400 und 1200 gsm, vorzugsweise zwischen 400 und 800 gsm beträgt.

14. Teppich für ein Fahrzeug nach einem der vorstehenden Ansprüche, wobei mindestens einige der Fäden transparente oder durchscheinende Filamente oder Spinnfasern umfassen, wobei diese Fäden vorzugsweise zwischen 5 und 60%, vorzugsweise zwischen 10 und 50%, vorzugsweise zwischen 20 und 40% transparente oder durchscheinende Filamente oder Spinnfasern umfassen, wobei der Prozentsatz als Prozentsatz eines Querschnittoberflächenbereichs des Fadens berechnet wird.

15. Teppich für ein Fahrzeug nach einem der vorstehenden Ansprüche, weiter eine Faser- oder Schaumstoffschicht umfassend, und wobei sich das flexible Multilayer zwischen der Faser- oder Schaumstoffschicht und dem Flor befindet.

## Revendications

1. Tapis (10) pour un véhicule comprenant au moins une couche de support et un velours (1) présentant des côtés avant et arrière, dans lequel le velours comprend des fils (14) et/ou des filaments et/ou des fibres courtes (12), **caractérisé en ce que** le tapis comprend en outre au moins une zone comprenant un multicouche flexible (2), comprenant une couche conductrice transparente (4) tournée vers le velours, une couche diélectrique (6), une couche émettrice de lumière comprenant un matériau électroluminescent (5) située directement entre la couche conductrice transparente (4) et la couche diélectrique (6), une seconde couche conductrice (7) adjacente à la couche diélectrique tournée à l'opposé du velours (1) et dans lequel la seconde couche conductrice (7) n'est pas en contact avec la couche conductrice transparente (4), et dans lequel le multicouche flexible (2) peut être connecté à des moyens destinés à conduire un courant électrique alternatif (CA) de sorte que la couche émettrice de lumière comprenant un matériau électroluminescent (5) émette de la lumière au moins à travers le velours (1) en réponse au champ électrique alternatif (CA), et dans lequel la au moins une couche de support est une couche flexible thermoplastique imperméable transparente ou translucide (3) située entre le côté avant du velours (1) et le multicouche flexible (2) dans lequel au moins certains des fils (14) et/ou filaments et/ou fibres courtes (12) sont en contact avec la couche flexible thermoplastique imperméable transparente ou translucide (3), étant de préférence partiellement incorporés dans la couche flexible thermoplastique imperméable transparente ou translucide (3).

2. Tapis (10) pour un véhicule comprenant au moins une couche de support et un velours (1) présentant des côtés avant et arrière, dans lequel le velours comprend des fils (14) et/ou filaments et/ou fibres courtes (12), **caractérisé en ce que** le tapis comprend en outre au moins une zone comprenant un multicouche flexible (2), comprenant une couche conductrice transparente (4) tournée vers le velours, une seconde couche conductrice (7), une couche émettrice de lumière diélectrique comprenant un matériau électroluminescent (9) située directement entre la couche conductrice transparente (4) et la seconde couche conductrice (7), et dans lequel la seconde couche conductrice (7) n'est pas en contact avec la couche conductrice transparente (4), et dans lequel le multicouche flexible (2) peut être connecté à des moyens destinés à conduire un courant électrique alternatif (CA) de sorte que la couche émettrice de lumière comprenant un matériau électroluminescent (5) émette de la lumière au moins à travers le velours (1) en réponse au champ électrique alternatif (CA), et dans lequel la au moins une couche de support est une couche flexible thermoplastique imperméable transparente ou translucide (3) située entre le côté avant du velours (1) et le multicouche flexible (2) dans lequel au moins certains des fils (14) et/ou filaments et/ou fibres courtes (12) sont en contact avec la couche flexible thermoplastique imperméable transparente ou translucide (3), étant de préférence partiellement incorporés dans la couche flexible thermoplastique imperméable transparente ou translucide (3).

3. Tapis pour un véhicule selon l'une des revendications précédentes, dans lequel la couche flexible thermoplastique imperméable transparente ou translucide (3) présente une viscosité entre 3 000 et 50 000 mPa.s, de préférence entre 4 000 et 20 000 mPa.s, de préférence entre 5 000 et 10 000 mPa.s mesurée selon la norme ISO 11443.

4. Tapis pour un véhicule selon l'une des revendications précédentes, dans lequel le tapis est un tapis tufté, un tapis aiguilleté, un tapis Dilour, un tapis avec une surface floquée ou un mat facultatif.

5. Tapis pour un véhicule selon l'une des revendications précédentes, comprenant en outre une seconde couche de support perméable étant un support primaire (13) et/ou comprenant en outre une couche de blocage perméable (19).

6. Tapis pour un véhicule selon l'une des revendications précédentes, dans lequel la couche flexible thermoplastique imperméable transparente ou translucide (3) présente un module élastique dans la plage de 1 à 200 MPa, de préférence 20 à 150 MPa, de préférence 30 à 100 MPa mesuré selon la norme ISO 527.

7. Tapis pour un véhicule selon l'une des revendications précédentes, dans lequel la couche flexible thermoplastique imperméable transparente ou translucide (3) est une couche viscoélastique.

8. Tapis pour un véhicule selon l'une des revendications précédentes, dans lequel une couche de substrat flexible (8) est directement connectée à la seconde couche conductrice (7), de préférence la couche de substrat flexible (8) est imperméable.

9. Tapis pour un véhicule selon l'une des revendications précédentes, dans lequel la couche flexible thermoplastique imperméable transparente ou translucide (3) comprend un polymère sélectionné parmi le groupe consistant en une polyoléfine telle que le polypropylène (PP) ou le polyéthylène (PE) ou des copolymères de propylène et d'éthylène (CoPE) ou le polyéthylène haute densité (PEhd) ou le polyéthylène basse densité (PEbd) ou le polyéthylène basse densité linéaire (LLDPE) ou la polyoléfine greffée par anhydride maléique (MAPE) ou l'élastomère de polyoléfine greffée par anhydride maléique, le polyéthylène téréphtalate (PET), le copolyester (CoPET), le polyamide (PA6, PA66, PA12), le copolyamide (CoPA), les élastomères thermoplastiques (TPE) tels que les copolymères bloc styrène (TPS) ou les élastomères de polyoléfine (POE), les élastomères de polyoléfine thermoplastique (TPO ou TPE-o) les vulcanisats thermoplastiques (TPE-v ou TPV), les polyuréthanes thermoplastiques (TPU), le copolyester thermoplastique (TPC ou TPE-E), les polyamides thermoplastiques (TPA ou TPE-A) et le latex.

10. Tapis pour un véhicule selon l'une des revendications précédentes, dans lequel l'épaisseur de la couche flexible thermoplastique imperméable transparente ou translucide (3) est comprise entre 0,2 mm et 5 mm, de préférence entre 0,5 mm et 3 mm, de préférence entre 1 mm et 2 mm.

11. Tapis pour un véhicule selon l'une des revendications précédentes, dans lequel au moins une parmi la seconde couche conductrice (7), la couche de substrat flexible (8) ou la couche diélectrique (6) est une couche opaque réfléchissante.

12. Tapis pour un véhicule selon l'une des revendications précédentes, dans lequel les couches du multicouche flexible (2) et ou au moins l'une des couches, la couche flexible thermoplastique imperméable transparente ou translucide (3) et la couche de substrat flexible (8) sont des couches imprimées de préférence imprimées par sérigraphie.

13. Tapis pour un véhicule selon l'une des revendications précédentes, dans lequel le grammage du velours est d'au moins 150 g/m², de préférence d'au moins 250 g/m², de préférence entre 400 g/m² et 2 000 g/m², de préférence entre 400 et 1 200 g/m², de préférence entre 400 et 800 g/m².

14. Tapis pour un véhicule selon l'une des revendications précédentes, dans lequel au moins certains des fils comprennent des filaments ou des fibres courtes transparent(e)s ou translucides, de préférence ces fils comprennent entre 5 et 60 %, de préférence entre 10 et 50%, de préférence entre 20 et 40% de filaments ou de fibres courtes transparent(e)s ou translucides dans lequel le pourcentage est calculé sous forme de pourcentage de surface en coupe transversale du fil.

15. Tapis pour un véhicule selon l'une des revendications précédentes, comprenant en outre une couche fibreuse ou de mousse, et dans lequel le multicouche flexible est situé entre la couche fibreuse ou de mousse et le velours.
